(19) Europäisches Patentamt
European Patent Office
Office européen des brevets

(11) **EP 4 640 403 A1**

(12) **EUROPÄISCHE PATENTANMELDUNG**

(43) Veröffentlichungstag:
**29.10.2025 Patentblatt 2025/44**

(21) Anmeldenummer: **24171600.0**

(22) Anmeldetag: **22.04.2024**

(51) Internationale Patentklassifikation (IPC):
**B29C 48/14** (2019.01) **B29C 48/285** (2019.01)
**B29C 48/50** (2019.01) **B29C 48/92** (2019.01)

(52) Gemeinsame Patentklassifikation (CPC):
**B29C 48/287; B29C 48/143; B29C 48/501;
B29C 48/92;** B29C 2948/926; B29C 2948/92723;
B29C 2948/92828; B29C 2948/92866

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH MA MD TN**

(71) Anmelder: **Covestro Deutschland AG**
**51375 Leverkusen (DE)**

(72) Erfinder:
• **THIEM, Hans-Juergen**
**41539 Dormagen (DE)**

• **HERMSDORFER, Ingmar**
**47829 Krefeld (DE)**
• **CONZEN, Carsten**
**51375 Leverkusen (DE)**
• **HESENER, Ute**
**44227 Dortmund (DE)**
• **REINER, Rudolf**
**40764 Langenfeld (DE)**

(74) Vertreter: **Levpat
c/o Covestro AG
Gebäude K12
51365 Leverkusen (DE)**

(54) **INERTISIERUNG VON TEILGEFÜLLTEN EXTRUDEREINLÄUFEN**

(57) Die vorliegende Erfindung betrifft ein Verfahren zum Betreiben eines Extruders, insbesondere zur variablen Einstellung des Sauerstoffgehalts im Zuführungsbereich des Extruders, wobei der Extruder einen Einfüllschacht für die Zuführung eines zu extrudierenden Materials aufweist, der an seinem einen Ende eine Einlauföffnung besitzt, an seinem gegenüberliegenden Ende in das Extrudergehäuse mündet und in dem zumindest eine Inertgaseinspeisungs-Einrichtung für die Zuführung eines Inertgasstroms in den Einfüllschacht vorgesehen ist, wobei der Inertgasvolumenstrom des Inertgasstroms in der Weise eingestellt wird, dass die Reynoldszahl des Inertgasstroms im Einfüllschacht Re wenigstens 180 beträgt. Die Erfindung betrifft ferner eine Steuerungsvorrichtung zur variablen Einstellung des Sauerstoffgehalts im Zuführungsbereich eines Extruders bei dessen Betrieb, insbesondere in einem erfindungsgemäßen Verfahren sowie einen Extruder mit einer diesem zugeordneten Steuerungsvorrichtung der vorgenannten Art.

EP 4 640 403 A1

## Beschreibung

Die vorliegende Erfindung betrifft ein Verfahren zum Betreiben eines Extruders, insbesondere zur variablen Einstellung des Sauerstoffgehalts im Zuführungsbereich des Extruders, wobei der Extruder einen Einfüllschacht für die Zuführung eines zu extrudierenden Materials aufweist, der an seinem einen Ende eine Einlauföffnung besitzt, an seinem gegenüberliegenden Ende in das Extrudergehäuse mündet und in dem zumindest eine Inertgaseinspeisungs-Einrichtung für die Zuführung eines Inertgasstroms in den Einfüllschacht vorgesehen ist. Die Erfindung betrifft ferner eine Steuerungsvorrichtung zur variablen Einstellung des Sauerstoffgehalts im Zuführungsbereich eines Extruders bei dessen Betrieb, insbesondere in einem erfindungsgemäßen Verfahren sowie einen Extruder mit einer diesem zugeordneten Steuerungsvorrichtung der vorgenannten Art.

## Stand der Technik

Extruder mit teilgefülltem Einlauf, wie sie weitgehend zur Aufbereitung oder Compoundierung von Thermoplasten und Elastomeren verwendet werden, stellen bei der Gefährdungsermittlung bezüglich Explosionsgefahren ein schwieriges Problem dar. Häufig werden wechselnde Komponenten mit potentiell gefahrdrohendem Anteil von brennbaren Stäuben (auch gegebenenfalls Granulatabrieb) eingesetzt. Die typische gravimetrische Dosierung von Schüttgütern mit hohen Genauigkeitsanforderungen erfordert ein atmosphärisch offenes System mit ausreichend Sauerstoff und die offen liegenden Extruderwellen können sowohl zu Reib- und Schlagfunken als auch zu lokal reibungsbedingt heißen Oberflächen führen. Aufgrund der komplexen mechanischen Belastungen und hohen Drehzahlen moderner Extruder, besonders der oftmals eingesetzten gleichdrehenden Zweiwellenextruder (TSE = Twin Screw Extruder) können die Hersteller für solche Rahmenbedingungen in der Regel keine Eignung für Explosionszonen (ATEX) im Inneren der Maschine von 20 und 21 aussprechen, selbst die Eignung für eine Zone 22 wird seitens der Hersteller nur unter stark einschränkenden Randbedingungen für die bestimmungsgemäße Verwendung ausgesprochen.

In Extrudern, in denen die Schneckenwellen kontinuierlich eine positive axiale Förderung des Schüttguts in Verfahrensrichtung bewirken, werden die eingetragenen Feststoffe schnell zu Haufwerk verdichtet und anschließend aufgeschmolzen, so dass im Inneren des gefüllten Extruders nicht mehr mit dem Auftreten explosionsfähiger Gemische gerechnet werden muss.

Beim Eintrag von Schüttgut wird Gas/Luft unter atmosphärischen Bedingungen mit dem Feststoff in den kritischen Bereich eingetragen und mit dem Feststoff in Verfahrensrichtung gefördert. Die Kompression des Haufwerks bis zur Aufschmelzung und die Koaleszenz der Partikel zur Schmelze drückt dabei die nicht-lösliche Fraktion dieses Gases (der weit überwiegende Anteil) entgegen der Verfahrensrichtung rückwärts, wo es entgegen dem eingetragenen Haufwerk im Einlauf aufsteigt. Unmittelbar über der Eintragsöffnung liegt somit ein dynamisches Gasgleichgewicht aus fallender und aufsteigender Luft vor, dessen relative Zusammensetzung für den gesamten kritischen Bereich repräsentativ ist.

Um das Auftreten explosionsfähiger Gemische im Inneren des Extruders in den o.g. explosionsgefährdeten Bereichen ausreichend sicher zu vermeiden, ist es bekannt, diesen Bereich mittels Stickstoff zu inertisieren. Dies hat dabei so zu erfolgen, dass im Inneren des teilgefüllten Bereichs des Extruders der Sauerstoffgehalt soweit reduziert wird, dass die Sauerstoffgrenzkonzentration der eingesetzten Stäube sicher unterschritten wird.

Die Sauerstoffgrenzkonzentration für Stäube ist eine sicherheitstechnische Kenngröße, die nach dem Normverfahren DIN EN 14034 - 4 (2011-04) ermittelt wird. Sie liegt bei organischen Stäuben im Bereich von 10 Vol.-% bei atmosphärischen Bedingungen. Sie unterliegt einem Druck- und Temperatureinfluss. Die maximale Betriebstemperatur kann im Bereich des teilgefüllten Extruders in der Gasphase konservativ hoch mit etwa 150 °C abgeschätzt werden.

Entsprechend dem Forschungsbericht für die BG RCI "Sicherheitstechnische Kenngrößen von Stäuben bei nicht-atmosphärischen Bedingungen" Dr. Ute Hesener, DEKRA EXAM GmbH, Bochum, 2015, gibt es nur eine begrenzte Anzahl von Untersuchungen, die sich mit dem Einfluss erhöhter Temperatur auf die Sauerstoffgrenzkonzentration bei Stäuben beschäftigen. Es ist jedoch mit einem reduzierten Wert für die Sauerstoffgrenzkonzentration zu rechnen. Auf der Basis der vorliegenden Untersuchungen kann von einer Reduzierung der Sauerstoffgrenzkonzentration von 1,9 Vol.-% Abnahme je 100 K Temperaturerhöhung ausgegangen werden. Für das vorgelegte Inertisierungskonzept wird daher von einer Sauerstoffgrenzkonzentration unter Prozessbedingungen von 7,4 Vol.-% ausgegangen.

Um einen ausreichenden Abstand zu kritischen Werten einzuhalten, wird für den Normalbetrieb ein maximaler Wert für den Sauerstoffgehalt im Extruder von 10 Vol.-%, besser noch von 6 Vol.-% angestrebt.

Da Schüttgüter typischerweise bei Luft gelagert und gefördert werden, muss eine Reduktion des Sauerstoffgehalts im kritischen Bereich unter die kritische Konzentration durch lokale Überlagerung des Einlaufs mit Inertgas am Extruder erfolgen. Dabei bieten sich nach Stand der Technik Gegen- und Querstromdosierung als effektivste Verfahren an. Solche Verfahren sind beispielsweise bekannt aus EP1318903B1, JP2012162048A, CN114248415A, EP3913015A1 und JP3216321A.

Problematisch hierbei ist, dass sich der Sauerstoffgehalt im kritischen Bereich des Extruders kaum mit vertretbarem Aufwand und ausreichender Genauigkeit und dies auch kontinuierlich bestimmen lässt. Das liegt unter anderem daran, dass die möglichen Sauerstoffsensoren in einem staubenden Medium nicht zuverlässig dauerhaft funktionieren und gegenüber den nötigen mechanischen und ggf. wässrigen Reinigungsverfahren in diesem Verfahrensbereich nicht robust sind.

Um diesem Problem pragmatisch zu begegnen wird daher aus Sicherheitsgründen oftmals eine deutlich größere Stickstoffmenge eingesetzt als tatsächlich nötig wäre. Dies erhöht die Betriebskosten des Extruders und erhöht die Gefahr feine Partikel der Rezeptur aus dem Einfüllschacht zu transportieren.

Es besteht daher ein Bedarf an einer Lösung, die Stickstoffdosierung möglichst auf das tatsächlich technische Maß zu reduzieren und dadurch die Wirtschaftlichkeit des Extrusionsverfahrens zu erhöhen.

**Aufgabe der Erfindung**

Die Aufgabe der vorliegenden Erfindung bestand demnach in der Bereitstellung eines Verfahrens, mit dem die Stickstoffdosierung zur Reduktion des Sauerstoffgehalts im kritischen Bereich des Extruders, nämlich im Zuführungsbereich, kontinuierlich auf das technisch erforderliche Maß reduziert werden kann und dabei gleichzeitig einen sicheren Betrieb des Extruders zu gewährleisten.

**Lösung der Aufgabe**

Die Aufgabe wurde gelöst durch ein Verfahren zum Betreiben eines Extruders, insbesondere zur variablen Einstellung des Sauerstoffgehalts im Zuführungsbereich des Extruders, wobei der Extruder einen Einfüllschacht für die Zuführung eines zu extrudierenden Materials aufweist, der an seinem einen Ende eine Einlauföffnung besitzt, an seinem gegenüberliegenden Ende in das Extrudergehäuse mündet und in dem zumindest eine Inertgaseinspeisungs-Einrichtung für die Zuführung eines Inertgasstroms in den Einfüllschacht vorgesehen ist, wobei das Verfahren dadurch gekennzeichnet ist, dass der Inertgasvolumenstrom des Inertgasstroms in der Weise eingestellt wird, dass die Reynoldszahl des Inertgasstroms im Einfüllschacht wenigstens 180 beträgt.

Im Rahmen der Entwicklungsarbeiten, die zu der vorliegenden Erfindung geführt haben, wurde überraschenderweise festgestellt, dass bei Einhaltung dieser Reynoldszahl des Inertgasstroms im Einfüllschacht die Sauerstoffkonzentration an der Einmündung des Einfüllschachts in das Extrudergehäuse höchstens 10 Vol.-% unter Normaldruck, bevorzugt von höchstens 6 Vol.-%, bestimmt gemäß DIN EN 14789, eingestellt und gehalten werden kann, ohne dass es hierfür einer tatsächlichen Messung der Sauerstoffkonzentration bedarf.

Ebenso überraschend wurde gefunden, dass man den Zusammenhang zwischen Stickstoffmenge und erreichter Sauerstoffkonzentration dimensionslos darstellen kann und Vorhersagen eines sicheren Betriebsbereichs ohne aufwendige Messreihen für beispielsweise gleichsinnig drehende, dichtkämmende Doppelschneckenextruder mit Wellendurchmesser 32 mm - 130 mm (entsprechend Durchätzen zwischen ca. 200 kg/h bis > 8000 kg/h) möglich sind.

Des Weiteren ist überraschend, dass eine allgemein übliche Gegenstromführung des Inertgasstroms zum sauerstoffbeladenen Einlaufstrom nicht optimal ist. Vielmehr erreicht ein gezielter Querstrom mit hohen lokalen Gasgeschwindigkeiten am Eintrag des Inertgases insgesamt günstigere Ergebnisse.

**Detaillierte Beschreibung der Erfindung**

In vorteilhafter Weiterbildung des erfindungsgemäßen Verfahrens beträgt die Reynoldszahl des aus dem Fallschacht ausströmenden Inertgases 180 bis 2000, insbesondere 300 bis 2000, bevorzugt 400 bis 2000, besonders bevorzugt 500 bis 2000. Auf diese Weise kann die Sauerstoffkonzentration an der Einmündung des Einfüllschachts auf das gewünschte Maß eingestellt werden, beispielsweise wenn geringere Konzentrationen als 10 Vol.-% unter Normaldurch angestrebt werden.

Im Rahmen der Erfindung ist die Reynoldszahl des Inertgasstroms vorzugsweise definiert als

$$Re = \frac{l * v_{mittel}}{\eta} = \frac{l}{\eta} * \frac{N_2}{A_S}$$

mit

$l$ = *charakteristische Länge des Einfüllschachtes,*
wobei $l$ im Falle eines rechteckigen Einfüllschachtes definiert ist als

$$l = charakteristische \ L\ddot{a}nge \ rechteckig = \frac{a+b}{2}$$

, mit a und b als Seitenlängen des Rechtecks,

und im Falle eines runden oder elliptischen Einfüllschachtes als

*l* = 2 * *a* mit a als Radius des Kreises oder bei einer Ellipse als langer Radius,

$N_2$ = *Volumestrom Inertgas in Normliter*,

$\eta$ = *kinematische Viskosität Inertgas bei Normalbedingungen*

$$v_{mittel} = \frac{N2}{A_s}$$ als mittlere Geschwindigkeit im Fallschacht

$A_s$ = Querschnittsfläche des Einfüllschachts, an der Stelle, die dem 2 bis 6-fachen Abstand des Schneckendurchmessers oberhalb des Schneckenkamms entspricht.

Normalbedingungen sind im Rahmen der vorliegenden Erfindungen eine Temperatur von 18 °C und ein Druck von 1 bar.

Weiterhin bevorzugt ist die Reynoldszahl des Inertgasstroms Re definiert als

$$Re = \frac{-lnB + \ln(O_2 - A - D * quer)}{C}$$

mit

quer = Anteil von Querströmung der Inertgaszugabe zu Gesamtstrom Inertgas

$O_2$ = Sauerstoff-Zielkonzentration in Vol.-%,

A = 2,2 bis 2,8;

B = 21 bis 22;

C = -0,003 bis -0,0035 und

D = - (A-0,3) bis - (A+1).

Aufgelöst nach der Sauerstoff-Zielkonzentration in Vol.-% $O_2$ stellt sich die Gleichung wie folgt dar:

$$O_2 = A + B * e^{C*Re} + D * quer$$

Im Rahmen der vorliegenden Erfindung ist es besonders bevorzugt, dass die Sauerstoff-Zielkonzentration in der Gleichung um wenigstens 2 Vol.-% niedriger als die real zuzulassende temporäre Maximalkonzentration $O_2$ eingestellt wird, weiter bevorzugt um wenigstens 3 Vol.-% niedriger oder gar um wenigstens 3,5 Vol.-% niedriger. Dies ist bevorzugt, um ein höheres Sicherheitspolster beim Betrieb zu gewährleisten, beispielsweise um plötzlich auftretende Schwankungen in der Zuführung des zu extrudierenden Materials kompensieren zu können. So kann beispielsweise anstelle der angestrebten zuzulassenden temporären Maximalkonzentration $O_2$ von 6 Vol.-% in der vorstehenden Formel die Sauerstoff-Zielkonzentration konservativ als 2,5 Vol.-% eingegeben werden.

Bei dem erfindungsgemäßen Verfahren verfügt der Extruder typischerweise über wenigstens eine Schneckenwelle, insbesondere über wenigstens zwei Schneckenwellen, die bevorzugt gleichlaufend angetrieben sind.

Bei dem eingesetzten Extruder ist der Einfüllschacht bevorzugt oberhalb des Extrudergehäuses angeordnet und weitestgehend vertikal ausgerichtet. Dies bedeutet beispielsweise einen Winkel von 90° +/- 10° zwischen Extrudergehäuse und Einfüllschacht, insbesondere von 90° +/- 5°.

In dem erfindungsgemäßen Verfahren ist vorzugsweise wenigstens eine der Inertgaseinspeisungs-Einrichtungen in einem Winkel von 90 +/- 45°, bezogen auf die Zuführungsrichtung des zu extrudierenden Materials, ausgerichtet, bevorzugt in einem Winkel von 90 +/- 15°, weiter bevorzugt in einem Winkel von 90 +/- 5°. Durch eine im Wesentlichen quer zur Zuführungsrichtung gerichteten Inertgaseinspeisung kann eine besonders effiziente Ausnutzung des Inertgases und eine bessere Durchmischung mit der im Einfüllschacht enthaltenen Luft gewährleistet werden, sodass lokal höhere Sauerstoffkonzentrationen als die angestrebte Konzentration weitestgehend vermieden werden können.

Nach einer weiteren bevorzugten Ausgestaltung des erfindungsgemäßen Verfahrens ist wenigstens eine der Inertgaseinspeisungs-Einrichtungen in einem Abstand von höchstens dem Dreifachen des Schneckenaussendurchmessers des Extruders oberhalb der Schneckenwellen-Oberkante angeordnet. Dies ist vorteilhaft, weil hierdurch die gewünschte Sauerstoffkonzentration speziell im kritischen Bereich oberhalb der Extruderschnecken sicher kontrolliert werden kann.

Hierbei ist es weiterhin bevorzugt, dass die Querschnittsfläche des Einfüllschachtes in Zuführungsrichtung des zu extrudierenden Materials unterhalb der Inertgaseinspeisungs-Einrichtung weitestgehend konstant ist, wobei beim Einsatz mehrerer Inertgaseinspeisungs-Einrichtungen die Querschnittsfläche des Einfüllschachtes in Zuführungsrichtung des zu extrudierenden Materials unterhalb der dem Extrudergehäuse am nächsten befindlichen Inertgaseinspeisungs-Einrichtung weitestgehend konstant ist.

In bevorzugter Weiterbildung des erfindungsgemäßen Verfahrens ist die Querschnittsfläche des Einfüllschachtes an seinem in das Extrudergehäuse mündenden Ende auf einer Länge von wenigstens der zweifachen charakteristischen Länge *l* weitestgehend konstant.

Bei der Durchführung des erfindungsgemäßen Verfahrens sollte die Einzugskapazität des Extruders größer sein als der dosierte Mengenstrom des zu extrudierenden Materials. Dadurch wird sichergestellt, dass der Extruder teilgefüllt betrieben wird und es nicht zu einem Stau an zu extrudierendem Material im Einfüllbereich kommt.

Im Rahmen des erfindungsgemäßen Verfahrens können im Prinzip sämtliche durch Extrusion verarbeitbare Materialen eingesetzt werden. Vorzugsweise ist das Material ausgewählt aus organischen Materialien, insbesondere aus thermoplasischen oder elastomeren Polymermaterialien. Dabei ist das zu extrudierende Material vorzugsweise ausgewählt aus Polycarbonat, Polyamid, Polyester, insbesondere Polybutylenterephthalat und Polyethylenterephthalat, Polylactid, Polyether, thermoplastischem Polyurethan, Polyacetal, Fluorpolymer, insbesondere Polyvinylidenfluorid, Polyethersulfonen, Polyolefinen, insbesondere Polyethylen und Polypropylen, Polyimid, Polyacrylat, insbesondere Poly(methyl)methacrylat, Polyphenylenoxid, Polyphenylensulfid, Polyetherketon, Polyaryletherketon, Styrolpolymerisaten, insbesondere Polystyrol, Styrolcopolymeren, insbesondere Styrolacrylnitrilcopolymer, Acrylnitrilbutadienstyrolblockcopolymeren, Polyvinylchlorid oder einem Blend von mindestens zwei der genannten Materialien.

Das zu extrudierende Material kann ferner Additive umfassen, die insbesondere ausgewählt sind aus Flammschutzmitteln, Thermo-Stabilisatoren, Antioxidantien, UV-Stabilisatoren, Entformungsmitteln, Pigmenten, mineralischen Füllstoffen sowie Mischungen dieser, wobei die mineralischen Füllstoffe insbesondere ausgewählt sind aus Talkum, Wollastonit, Kaolin, Calciumcarbonat, Quarzglas, Graphit oder Mischungen von diesen.

Nach einer besonders bevorzugten Ausführungsform des erfindungsgemäßen Verfahrens beträgt die Sauerstoffkonzentration an der Einmündung des Einfüllschachts in das Extrudergehäuse unter 10 Vol.-% unter Normaldruck, bestimmt nach DIN EN 14789 - 2017-05, insbesondere höchstens 8 Vol.-%, bevorzugt höchstens 7 Vol.-%, weiter bevorzugt höchstens 6 Vol.-%.

Als Inertgas kann im Prinzip jedes Gas eingesetzt werden, das unter den gegebenen Bedingungen nicht mit dem zu extrudierenden Material reagiert. In der Praxis ist das Inertgas typischerweise ausgewählt aus Stickstoff, Edelgasen, insbesondere Argon, Kohlendioxid oder Mischungen von diesen.

Ein weiterer Gegenstand der vorliegenden Erfindung betrifft eine Steuerungsvorrichtung zur variablen Einstellung des Sauerstoffgehalts im Zuführungsbereich eines Extruders bei dessen Betrieb, insbesondere in einem erfindungsgemäßen Verfahren, wobei der Extruder einen Einfüllschacht für die Zuführung eines zu extrudierenden Materials aufweist, der an seinem einen Ende eine Einlauföffnung besitzt und an seinem gegenüberliegenden Ende in das Extrudergehäuse mündet und in dem zumindest eine Inertgaseinspeisungs-Einrichtung für die Zuführung eines Inertgasstroms in den Einfüllschacht vorgesehen ist, wobei die Steuerungsvorrichtung derart ausgestaltet ist, dass damit der Inertgasvolumenstrom des Inertgasstroms in der Weise einstellbar ist, dass die Reynoldszahl Re des Inertgasstroms im Einfüllschacht wenigstens 180 beträgt.

Vorzugsweise ist die Steuerungsvorrichtung derart ausgestaltet, dass damit die Reynoldszahl $Re_{Injekt}$ des Inertgasstroms am Punkt der Einspeisung auf wenigstens 3.000 einstellbar ist, insbesondere auf 3.000 bis 80.000.

Die Erfindung betrifft des Weiteren einen Extruder mit einer diesem zugeordneten erfindungsgemäßen Steuerungsvorrichtung zur variablen Einstellung des Sauerstoffgehalts.

Die Erfindung betrifft insbesondere folgende Ausführungsformen:
Nach einer ersten Ausführungsform betrifft die Erfindung ein

1. Verfahren zum Betreiben eines Extruders, insbesondere zur variablen Einstellung des Sauerstoffgehalts im Zuführungsbereich des Extruders, wobei der Extruder einen Einfüllschacht für die Zuführung eines zu extrudierenden Materials aufweist, der an seinem einen Ende eine Einlauföffnung besitzt, an seinem gegenüberliegenden Ende in das Extrudergehäuse mündet und in dem zumindest eine Inertgaseinspeisungs-Einrichtung für die Zuführung eines Inertgasstroms in den Einfüllschacht vorgesehen ist, wobei das Verfahren dadurch gekennzeichnet ist, dass der Inertgasvolumenstrom des Inertgasstroms in der Weise eingestellt wird, dass die Reynoldszahl des Inertgasstroms im Einfüllschacht wenigstens 180 beträgt.

2. Verfahren nach Ausführungsform 1, dadurch gekennzeichnet, dass die Reynoldszahl des Inertgasstroms 180 bis 2000 beträgt, insbesondere 300 bis 2000, bevorzugt 400 bis 2000, besonders bevorzugt 500 bis 2000.

3. Verfahren nach Ausführungsform 1 oder 2, dadurch gekennzeichnet, dass die Reynoldszahl des Inertgasstroms definiert ist als

$$Re = \frac{l * v_{mittel}}{\eta} = \frac{l}{\eta} * \frac{N_2}{A_S}$$

mit

$l$ = *charakteristische Länge des Einfüllschachtes,*

wobei $l$ im Falle eines rechteckigen Einfüllschachtes definiert ist als

$$l = charakteristische\ L\ddot{a}nge\ rechteckig = \frac{a+b}{2}$$, mit a und b als Seitenlängen des Rechtecks,

im Falle eines runden oder elliptischen Einfüllschachtes als

$l$ = 2 * *a* mit a als Radius des Kreises oder bei einer Ellipse als langer Radius,

$N_2$ = *Volumestrom Inertgas in Normliter,*

$\eta$ = *kinematische Viskosität Inertgas bei Normalbedingungen:* 18°C, 1 *bar,*

$$v_{mittel} = \frac{N2}{A_S}$$ als mittlere Geschwindigkeit im Fallschacht,

$A_S$ = Querschnittsfläche des Einfüllschachts, wobei $A_s$ auf Höhe des 2 bis 6-fachen des Schneckendurchmessers oberhalb des Schneckenkamms ermittelt wird,

mit

$O_2$ = Sauerstoff-Zielkonzentration in Vol.-%,

4. Verfahren nach Ausführungsform 3, dadurch gekennzeichnet, dass die Sauerstoffzielkonzentration $O_2$ in Vol.-% definiert ist als

$$O_2 = A + B * e^{C*Re} + D * quer$$

$$Re = \frac{-lnB + \ln(O_2 - A - D * quer)}{C}$$

quer = Anteil von Querströmung der Inertgaszugabe zu Gesamtstrom Inertgas

A = 2,2 bis 2,8;

B = 21 bis 22;

C = -0,003 bis -0,0035;

D = - (A-0,3) bis - (A+1).

$$Re_{Injekt} = \frac{d * v_{mittel2}}{\eta}$$

$$v_{mittel2} = \frac{4 * N2}{\pi * d^2}$$

mit $Re_{Injekt}$ als Reynoldszahl des Inertgasstroms am Punkt der Einspeisung.

5. Verfahren nach einer der vorstehenden Ausführungsformen, dadurch gekennzeichnet, dass die Reynoldszahl $Re_{Injekt}$ des Inertgasstroms am Punkt der Einspeisung in den Einfüllschacht wenigstens 3.000 beträgt, insbesondere 3.000 bis 80.000, wobei $Re_{Injekt}$ definiert ist als

$$Re_{Injekt} = \frac{d * v_{mittel2}}{\eta}$$

mit

$$v_{mittel2} = \frac{4 * N_2}{\pi * d^2},$$

$\eta$ = *kinematische Viskosität Inertgas bei Normalbedingungen*: 18°C, 1 *bar*,

$N_2$ = *Volumestrom Inertgas in Normliter* und

$d$ = *Durchmesser der Einspeiseöffnung für* $N_2$.

6. Verfahren nach einer der vorstehenden Ausführungsformen, dadurch gekennzeichnet, dass der Extruder über wenigstens eine Schneckenwelle verfügt, insbesondere über wenigstens zwei Schneckenwellen, die bevorzugt gleichlaufend angetrieben sind.

7. Verfahren nach einer der vorstehenden Ausführungsformen, dadurch gekennzeichnet, dass der Einfüllschacht oberhalb des Extrudergehäuses angeordnet und weitestgehend vertikal ausgerichtet ist.

8. Verfahren nach einer der vorstehenden Ausführungsformen, dadurch gekennzeichnet, dass wenigstens eine der Inertgaseinspeisungs-Einrichtungen in einem Winkel von 90 +/- 45°, bezogen auf die Zuführungsrichtung des zu extrudierenden Materials, ausgerichtet ist, bevorzugt in einem Winkel von 90 +/- 15°, weiter bevorzugt in einem Winkel von 90 +/- 5°.

9. Verfahren nach einer der Ausführungsformen 6 bis 8, dadurch gekennzeichnet, dass wenigstens eine der Inertgaseinspeisungs-Einrichtungen in einem Abstand von höchstens dem Dreifachen des Schneckenaussendurchmessers des Extruders oberhalb der Schneckenwellen-Oberkante angeordnet ist.

10. Verfahren nach Ausführungsform 9, dadurch gekennzeichnet, dass die Querschnittsfläche des Einfüllschachtes in Zuführungsrichtung des zu extrudierenden Materials unterhalb der Inertgaseinspeisungs-Einrichtung weitestgehend konstant ist, wobei beim Einsatz mehrerer Inertgaseinspeisungs-Einrichtungen die Querschnittsfläche des Einfüllschachtes in Zuführungsrichtung des zu extrudierenden Materials unterhalb der dem Extrudergehäuse am nächsten befindlichen Inertgaseinspeisungs-Einrichtung weitestgehend konstant ist.

11. Verfahren nach einer der Ausführungsformen 3 bis 10, dadurch gekennzeichnet, dass die Querschnittsfläche des Einfüllschachtes an seinem in das Extrudergehäuse mündenden Ende auf einer Länge von wenigstens der zweifachen charakteristischen Länge *l* weitestgehend konstant ist.

12. Verfahren nach einer der vorstehenden Ausführungsformen, dadurch gekennzeichnet, dass die Einzugskapazität des Extruders größer ist als der dosierte Mengenstrom des zu extrudierenden Materials.

13. Verfahren nach einer der vorstehenden Ausführungsformen, dadurch gekennzeichnet, dass das zu extrudierende Material ausgewählt ist aus organischen Materialien, insbesondere aus thermoplasischen oder elastomeren Polymermaterialien.

14. Verfahren nach Ausführungsform 13, dadurch gekennzeichnet, dass das zu extrudierende Material ausgewählt ist aus Polycarbonat, Polyamid, Polyester, insbesondere Polybutylenterephthalat und Polyethylenterephthalat, Polylactid, Polyether, thermoplastischem Polyurethan, Polyacetal, Fluorpolymer, insbesondere Polyvinylidenfluorid, Polyethersulfonen, Polyolefinen, insbesondere Polyethylen und Polypropylen, Polyimid, Polyacrylat, insbesondere Poly(methyl)methacrylat, Polyphenylenoxid, Polyphenylensulfid, Polyetherketon, Polyaryletherketon, Styrolpolymerisaten, insbesondere Polystyrol, Styrolcopolymeren, insbesondere Styrolacrylnitrilcopolymer, Acrylnitrilbutadienstyrolblockcopolymeren, Polyvinylchlorid oder einem Blend von mindestens zwei der genannten Materialien.

15. Verfahren nach Ausführungsform 13 oder 14, dadurch gekennzeichnet, dass das zu extrudierende Material ferner Additive umfasst, die insbesondere ausgewählt sind aus Flammschutzmitteln, Thermo-Stabilisatoren, Antioxidantien, UV-Stabilisatoren, Entformungsmitteln, Pigmenten, mineralischen Füllstoffen sowie Mischungen dieser, wobei die mineralischen Füllstoffe insbesondere ausgewählt sind aus Talkum, Wollastonit, Kaolin, Calciumcarbonat, Quarzglas, Graphit oder Mischungen von diesen.

16. Verfahren nach einer der vorstehenden Ausführungsformen, dadurch gekennzeichnet, dass die Sauerstoffkonzentration an der Einmündung des Einfüllschachts in das Extrudergehäuse unter 10 Vol.-% unter Normaldruck beträgt, insbesondere höchstens 8 Vol.-%, bevorzugt höchstens 7 Vol.-%, weiter bevorzugt höchstens 6 Vol.-%, bestimmt nach DIN EN 14789 - 2017-05.

17. Verfahren nach einer der vorstehenden Ausführungsformen, dadurch gekennzeichnet, dass das Inertgas ausgewählt ist aus Stickstoff, Edelgasen, insbesondere Argon, Kohlendioxid oder Mischungen von diesen.

18. Steuerungsvorrichtung zur variablen Einstellung des Sauerstoffgehalts im Zuführungsbereich eines Extruders bei dessen Betrieb, insbesondere in einem Verfahren nach einer der Ausführungsformen 1 bis 17, wobei der Extruder einen Einfüllschacht für die Zuführung eines zu extrudierenden Materials aufweist, der an seinem einen Ende eine Einlauföffnung besitzt und an seinem gegenüberliegenden Ende in das Extrudergehäuse mündet und in dem zumindest eine Inertgaseinspeisungs-Einrichtung für die Zuführung eines Inertgasstroms in den Einfüllschacht vorgesehen ist, wobei die Steuerungsvorrichtung derart ausgestaltet ist, dass damit der Inertgasvolumenstrom des Inertgasstroms in der Weise einstellbar ist, dass die Reynoldszahl Re des Inertgasstroms im Einfüllschacht wenigstens 180 beträgt.

19. Steuerungsvorrichtung nach Ausführungsform 18, dadurch gekennzeichnet, dass die Steuerungsvorrichtung derart ausgestaltet ist, dass damit die Reynoldszahl $Re_{Injekt}$ des Inertgasstroms am Punkt der Einspeisung auf wenigstens 3.000 einstellbar ist, insbesondere auf 3.000 bis 80.000.

20. Extruder mit einer diesem zugeordneten Steuerungsvorrichtung zur variablen Einstellung des Sauerstoffgehalts gemäß Ausführungsform 18 oder 19.

**Beispiele**

Beispiel 1

Es wurde ein gleichdrehender Zweiwellenextruder CXE32 der Herstellers CPM Extricom mit 32 mm Schneckenaußendurchmesser und UD-Verhältnis von 44 verwendet. Als Feed wurde ein BPA-PC in Granulatform (Stranggranulat 3 mm Länge und mittleres Korngewicht 22 mg) verwendet, sowie anteilig ein BPA-PC-Mahlgut mit mittlerem Durchmesser d50 von 600 $\mu$m - dessen Gesamtanteil am Zulaufstrom in der Versuchsreihe von 9-75 % zulasten des Granulats variiert wurde. Der Gesamtmassestrom wurde von 100 kg/h bis 200 kg/h variiert.

Der Einlauf des Extruders war rechteckig gestaltet, mit Länge des Einlaufs l=0,075 m und Breite des Einlaufs d= 0,05 m. Stickstoff wurde 90 mm oberhalb des oberen Schneckenkamms im Winkel von 90° zur Massezuführung über eine Zuleitung von 3 mm Innendurchmesser eingeblasen. Zur Sauerstoffkonzentrationsmessung wurde Gas kontinuierlich an einer Stelle mittig oberhalb des Schneckenzwickels in 45 mm Abstand zum oberen Schneckenkamm entnommen und einem paramagnetischen Sauerstoffdetektor der Firma Horiba Typ PG-250 kontinuierlich zugeführt. Die Messung erfolgte nach DIN EN 14789, Messbereich war 0-100 Vol. % $O_2$ mit Fehlerrate +/-1 Vol. % $O_2$ und am Tag der Messung mit $N_2$ kalibriert.

Die Zielkonzentration von Restsauerstoff im Modell wurde konservativ auf 2,5 Vol% $O_2$ festgelegt, um das Maximalziel von gemessenen 6 Vol. % O2 sicher nicht zu überschreiten. Daraus abgeleitet ergibt sich nach Modell eine Soll-Reynoldszahl des Inertgases von 755, entsprechend 2,0 N $m^3$/h (= 2.04 Norm Liter/h) Stickstoff.

$$Re = \frac{-lnB + \ln(O_2 - A - D * quer)}{C}$$

$$Re = \frac{-\ln(21{,}006) + \ln(2{,}5 - 2{,}289 + 1{,}971 * 1)}{-0{,}003} = 755$$

$$\frac{Re * A_S * \eta}{l} = \frac{755 * 0{,}00375 m^2 * 0{,}000015\, m^2/s}{0{,}075 m}$$

$$= \frac{0{,}0005663 m^3}{s} = 2{,}04 m^3/h$$

$$v_{mittel2} = \frac{4 * N_2}{\pi * d^2} = \frac{4 * 2{,}0 m^3/h}{\pi * 9 mm^2} = 78{,}6\, m/s$$

$$Re_{Injekt} = \frac{d * v_{mittel2}}{\eta} = \frac{0{,}003 m * 78{,}6\, m/s}{0{,}000015\, m^2/s} = 15720$$

Kinematische Viskosität Stickstoff: Bei 18°C und 1 bar Umgebungsdruck (also Normalbedingungen), 0,000015 $m^2$ /s.

Bei einem Durchsatz bis 200 kg/h und maximal 75% Massenanteil pulverförmiger BPA-PC-Zuführung wurden bei 2,0 $Nm^3$/h $N_2$ Zugabe Messwerte von 5 Vol. % $O_2$ nicht überschritten.

In der Folge wurde der Stickstoffstrom absichtlich unter die erfindungsgemäße Vorgabemenge reduziert um zu belegen, dass dadurch tatsächlich die vorgegebene maximale Zielsauerstoffkonzentration überschritten wird. Das folgende Beispiel ist somit ein Referenzbeispiel: Innerhalb der Messserie wurden bei 100-150 kg/h und 23-50 Masse % BPA-PC-Pulver am Gesamt-Zulauf, sowie Stickstoffströme im Querstrom von 1 bis 1,5 $Nm^3$/h bis maximal 7,4 Vol. % $O_2$ gemessen. Eine plausibilisierende Modellrechnung auf Basis von 4,9 Vol. % $O_2$-Konzentration entsprechend einem Vertrauensbereich bis 7,4% $O_2$ ergab Re($N_2$) von 508 und einen theoretischen $N_2$-Strom von 1,37 $Nm^3$/h.

Die Zugabe von Stickstoff erfolgte durch eine kreisförmige Kapillare von 3 mm Durchmesser. Bei 2,0 $Nm^3$/h wird so die Stickstoffströmung mit einer Reynoldszahl $Re_{injekt}$ von 15.720 charakterisiert, bei 1,5 $Nm^3$/h von $Re_{injekt}$ = 11.790.

Beispiel 2

Es wurde ein gleichdrehender Zweiwellenextruder ZSK92MC der Herstellers Coperion mit 92 mm Schneckenaußendurchmesser und L/D-Verhältnis von 36 verwendet. Als Feed wurde eine PC/SAN/ABS-Blend-Rezeptur verwendet, bestehend aus 74 Masse% PC- und SAN-Granulaten (Stranggranulat 3 mm Länge und mittleres Korngewicht 22 mg), 24% eines ABS-Pulvers mit d50 von 800 $\mu$m, sowie 2,0% einer Additivmischung von Pulvern auf Basis des gleichen ABS-Pulvers mit Zusatz an Entformungsmitteln und Stabilisatoren. Der Durchsatz betrug 2800 kg/h.

Der Einlauf des Extruders war rechteckig gestaltet, mit Länge des Einlaufs l=0,165 m und Breite des Einlaufs d=0,15 m. Stickstoff wurde 45 mm oberhalb des oberen Schneckenkamms im Winkel von 90° zur Massezuführung über eine Zuleitung von 8 mm Innendurchmesser eingeblasen. Zur Sauerstoffkonzentrationsmessung wurde Gas kontinuierlich an einer Stelle mittig oberhalb des Schneckenzwickels in 45 mm Abstand zum oberen Schneckenkamm entnommen und einem paramagnetischen Sauerstoffdetektor der Firma Horiba Typ PG-250 kontinuierlich zugeführt. Die Messung erfolgte nach DIN EN 14789, Messbereich war 0-100 Vol. % $O_2$ mit Fehlerrate +/-1 Vol. % $O_2$ und am Tag der Messung mit $N_2$ kalibriert.

Die Zielkonzentration von Restsauerstoff im Modell wurde konservativ auf 2,5 Vol. % $O_2$ festgelegt, um das Maximalziel von gemessenen 6 Vol. % $O_2$ nicht zu überschreiten. Daraus abgeleitet ergibt sich nach Modell eine Soll-Reynoldszahl des Inertgases von 755, entsprechend 6,1 $Nm^3$/h Stickstoff. Beim Durchsatz bis 2800 kg/h der Zielrezeptur und 6,1 $Nm^3$/h $N_2$-Zugabe wurden maximal 6,0 Vol. % O2 gemessen. Die Stickstoffinjektion im Querstrom wird durch eine $Re_{injekt}$ von 17.979 charakterisiert.

$$Re = \frac{-lnB + \ln(O_2 - A - D * quer)}{C}$$

$$Re = \frac{-\ln(21{,}006) + \ln(2{,}5 - 2{,}289 + 1{,}971 * 1)}{-0{,}003} = 755$$

$$Re = \frac{l*v_{mittel}}{\eta} = \frac{l}{\eta} * \frac{N_2}{A_S}$$

$$N_2 = \frac{Re * A_S * \eta}{l} = \frac{755 * 0{,}02475m^2 * 0{,}000015\ m^2/s}{0{,}165m}$$

$$= \frac{0{,}001699m^3}{s} = 6{,}1m^3/h$$

$$v_{mittel2} = \frac{4 * N_2}{\pi * d^2} = \frac{4 * 6{,}1m^3/h}{\pi * 64mm^2} = 33{,}7\ m/s$$

$$Re_{Injekt} = \frac{d * v_{mittel2}}{\eta} = \frac{0{,}008m * 33{,}7\ m/s}{0{,}000015\ m^2/s} = 17979$$

Kinematische Viskosität Stickstoff: Bei 18°C und 1 bar Umgebungsdruck (also Normalbedingungen), 0,000015 $m^2$ /s.

Eine Prognoserechnung auf Basis 0,8 Vol. % $O_2$ Soll ergibt Re ($N_2$) von 1260 und einen Stickstoffstrom von 10 $Nm^3$/h. Bei 10 $Nm^3$/h $N_2$ - Zugabe wurden reproduzierbar 1,3-1,6 Vol.% $O_2$ gemessen.

Beispiel 3

Es wurde ein gleichdrehender Zweiwellenextruder ZSK133 der Herstellers Coperion mit 133 mm Schneckenaußendurchmesser und L/D-Verhältnis von 36 verwendet. Als Feed wurde eine PC/PET/ABS-Blend-Rezeptur verwendet, bestehend aus 87,1 Masse % PC- und PET-Granulaten (mittleres Korngewicht 22 mg), 10 % eines ABS-Pulvers mit d50 von ca. 700 $\mu$m, sowie 2,9 % einer Additivmischung von Pulvern auf Basis eines BPA-PC-Mahlguts mit d50 von 600$\mu$m mit Zusatz an Entformungsmitteln und Stabilisatoren. Der Durchsatz betrug 3.800 kg/h.

Der Einlauf des Extruders war rechteckig gestaltet, mit Länge des Einlaufs l=0,26 m und Breite des Einlaufs d= 0,22 m. Stickstoff wurde 45 mm oberhalb des oberen Schneckenkamms im Winkel von 90° zur Massezuführung über eine Zuleitung von 8 mm Innendurchmesser eingeblasen. Zur Sauerstoffkonzentrationsmessung wurde Gas kontinuierlich an einer Stelle mittig oberhalb des Schneckenzwickels in 45 mm Abstand zum oberen Schneckenkamm entnommen und einem paramagnetischen Sauerstoffdetektor der Firma Horiba Typ PG-250 kontinuierlich zugeführt. Die Messung erfolgte nach DIN EN 14789, Messbereich war 0-100 Vol. % $O_2$ mit Fehlerrate +/-1 Vol. % $O_2$ und am Tag der Messung mit $N_2$ kalibriert.

Die Zielkonzentration von Restsauerstoff wurde im Modell konservativ auf 2,5 Vol. % O2 festgelegt, um das Maximalziel von gemessenen 6 Vol. % O2 nicht zu überschreiten. Daraus abgeleitet ergibt sich nach Modell eine Soll-Reynoldszahl des Inertgases von 755 entsprechend ca. 9 $Nm^3$/h Stickstoff. Beim Durchsatz bis 3.800 kg/h der Zielrezeptur und 10 $Nm^3$/h $N_2$-Zugabe wurden maximal 3,7 Vol. % $O_2$ gemessen. Bei 16 $Nm^3$/h $N_2$ - Zugabe wurden reproduzierbar 1,7-2,2 Vol.% $O_2$ erreicht. Eine Prognoserechnung auf Basis 0,8 Vol. % $O_2$ Soll ergibt Re ($N_2$) von 1260 und einen Stickstoffstrom von 15 $Nm^3$/h.

$$Re = \frac{-\ln(21{,}006) + \ln(2{,}5 - 2{,}289 + 1{,}971 * 1)}{-0{,}003} = 755$$

$$Re = \frac{l * v_{mittel}}{\eta} = \frac{l}{\eta} * \frac{N_2}{A_S}$$

$$N_2 = \frac{Re * A_S * \eta}{l} = \frac{755 * 0,0572m^2 * 0,000015 \, m^2/s}{0,26m}$$

$$= \frac{0,00249m^3}{s} = 8,97m^3/h$$

$$v_{mittel2} = \frac{4 * N_2}{\pi * d^2} = \frac{4 * 8,97m^3/h}{\pi * 64mm^2} = 49,57 \, m/s$$

$$Re_{Injekt} = \frac{d * v_{mittel2}}{\eta} = \frac{0,008m * 33,7 \, m/s}{0,000015 \, m^2/s} = 26437$$

Kinematische Viskosität Stickstoff: Bei 18°C und 1 bar Umgebungsdruck (also Normalbedingungen), 0,000015 $m^2$ /s.

Beispiel 4

Es wurde ein gleichdrehender Zweiwellenextruder ZA130 der Herstellers Krauss Maffei Extrusion mit Schneckenaußendurchmesser von 139 mm und nominalem L/D-Verhältnis von 36 verwendet. Als Feed wurde eine PC/SAN/ABS-Blend-Rezeptur verwendet, bestehend aus 96,3 Masse % PC-, SAN- und ABS-Granulaten mit mittlerem Korngewicht ca. 22 mg, sowie 3,7 Masse % einer Additivmischung von Pulvern auf Basis eines ABS-Pulvers mit d50 von 800 μm mit Zusatz an Entformungsmitteln und Stabilisatoren. Der Durchsatz betrug 8.500 kg/h.
Der Einlauf des Extruders war rechteckig gestaltet, mit Länge des Einlaufs l=0,22 m und Breite des Einlaufs d= 0,20 m. Stickstoff wurde im Gegenstrom durch Bohrungen im Einlaufgehäuse und über eine Drucküberlagerung der Extruder-Stopfbuchse (0,5 $Nm^3$/h) eingeblasen, stieg also im Winkel von 180° zur Massezuführung im Einlaufgehäuse auf. Zur Sauerstoffkonzentrationsmessung wurde Gas kontinuierlich an einer Stelle mittig oberhalb des Schneckenzwickels in 45 mm Abstand zum oberen Schneckenkamm entnommen und einem paramagnetischen Sauerstoffdetektor der Firma Horiba Typ PG-250 kontinuierlich zugeführt. Die Messung erfolgte nach DIN EN 14789, Messbereich war 0-100 Vol. % $O_2$ mit Fehlerrate +/-1 Vol. % $O_2$ und am Tag der Messung mit $N_2$ kalibriert.
Bedingt durch die Verwendung von Gegen- statt Querstrom des Inertgases in dieser Linie variiert die prognostiziert notwendige Re-Zahl und damit die Stickstoffprognose stark innerhalb kleiner Variationen der Sauerstoff-Zielkonzentration. Darum wurde die Zielkonzentration von Restsauerstoff im Modell konservativ auf 2,3 Vol. % $O_2$ festgelegt, um das Maximalziel von gemessenen 6 Vol. % $O_2$ nicht zu überschreiten. Daraus abgeleitet ergibt sich nach Modell eine Soll-Reynoldszahl des Inertgases von 2518, entsprechend 27,2 $Nm^3$/h Stickstoff. Da bei der Gegenstromeinspeisung der Stickstoff über die gesamte Trichteröffnung von unten durch die Schneckenzwischenräume austritt wird bei diesem Versuchsaufbau kein $Re_{injekt}$ definiert.

$$Re = \frac{-\ln(21,006) + \ln(2,3 - 2,289 + 1,971 * 0)}{-0,003} =$$

$$Re = \frac{l * v_{mittel}}{\eta} = \frac{l}{\eta} * \frac{N_2}{A_S}$$

$$N_2 = \frac{Re * A_S * \eta}{l} = \frac{2518 * 0,044 m^2 * 0,000015\ m^2/s}{0,22 m}$$

$$= \frac{0,00755 m^3}{s} = 27,2 m^3/h$$

Kinematische Viskosität Stickstoff: Bei 18°C und 1 bar Umgebungsdruck (also Normalbedingungen), 0,000015 $m^2$ /s.

Beim Durchsatz von 8.500 kg/h der Zielrezeptur und 22,5 Nm$^3$/h N2-Zugabe wurden maximal 5,5 Vol. % O2 gemessen.

Eine vergleichende Berechnung für Stickstoffzugabe im Querstrom für ansonsten gleiche Randbedingungen ergibt Soll-Re des Inertgases von 800 und 9 Nm$^3$/h Ziel der $N_2$-Einspeisung. Im Vergleich zu Beispiel 3 mit geometrisch ähnlichen Verhältnissen, wo Re-Zahlen von 800-1200 (entsprechend N2-Einspeisungen von 9-15 Nm$^3$/h) bei Querstromdosierung voll ausreichend sind, zeigt Beispiel 4 nicht nur, dass die erfindungsgemäße Modellrechnung auch bei Gegenstromeinspeisung von $N_2$ verlässliche Ergebnisse liefert, sondern belegt zudem den vorteilhaften Effekt der Inertgaszugabe in Quer- statt Gegenstrom.

**Patentansprüche**

1.  Verfahren zum Betreiben eines Extruders, insbesondere zur variablen Einstellung des Sauerstoffgehalts im Zuführungsbereich des Extruders, wobei der Extruder einen Einfüllschacht für die Zuführung eines zu extrudierenden Materials aufweist, der an seinem einen Ende eine Einlauföffnung besitzt, an seinem gegenüberliegenden Ende in das Extrudergehäuse mündet und in dem zumindest eine Inertgaseinspeisungs-Einrichtung für die Zuführung eines Inertgasstroms in den Einfüllschacht vorgesehen ist,
    **dadurch gekennzeichnet, dass**
    der Inertgasvolumenstrom des Inertgasstroms in der Weise eingestellt wird, dass die Reynoldszahl des Inertgaststroms im Einfüllschacht Re wenigstens 180 beträgt.

2.  Verfahren nach Anspruch 1, **dadurch gekennzeichnet, dass** die Reynoldszahl des Inertgasstroms Re 180 bis 2000 beträgt, insbesondere 300 bis 2000, bevorzugt 400 bis 2000, besonders bevorzugt 500 bis 2000.

3.  Verfahren nach Anspruch 1 oder 2, **dadurch gekennzeichnet, dass** die Reynoldszahl des Inertgasstroms definiert ist als

$$Re = \frac{l * v_{mittel}}{\eta} = \frac{l}{\eta} * \frac{N_2}{A_S}$$

mit

l = *charakteristische Länge des Einfüllschachtes,*
wobei l im Falle eines rechteckigen Einfüllschachtes definiert ist als

$$l = charakteristische\ L\ddot{a}nge\ rechteckig = \frac{a+b}{2}$$, wobei a und b Länge und Breite des Rechtecks beschreiben,
im Falle eines runden oder elliptischen Einfüllschachtes als
l = 2 * *a* mit a als Radius des Kreises oder bei einer Ellipse als langer Radius,
$N_2$ = *Volumestrom Inertgas in Normliter,*
$\eta$ = *kinematische Viskosität Inertgas bei Normalbedingungen* (18°C *und* 1 *bar*)

$$v_{mittel} = \frac{N_2}{A_S}$$ , als mittlere Geschwindigkeit im Fallschacht und
$A_S$ = Querschnittsfläche des Einfüllschachts, an der Stelle, die dem 2 bis 6-fachen Abstand des Schneckendurchmessers oberhalb des Schneckenkamms entspricht.

4. Verfahren nach einem der vorstehenden Ansprüche, **dadurch gekennzeichnet, dass** die Reynoldszahl des Inertgasstroms Re definiert ist als

$$Re = \frac{-lnB + \ln(O_2 - A - D * quer)}{C}$$

mit

$O_2$ = Sauerstoff-Zielkonzentration in Vol.-%,
quer = Anteil von Querströmung der Inertgaszugabe zu Gesamtstrom Inertgas
A = 2,2 bis 2,8;
B = 21 bis 22;
C = -0,003 bis -0,0035 und
D = -(A-0,3) bis -(A+1).

5. Verfahren nach einem der vorstehenden Ansprüche, **dadurch gekennzeichnet, dass** die Reynoldszahl $Re_{Injekt}$ des Inertgasstroms am Punkt der Einspeisung in den Einfüllschacht wenigstens 3.000 beträgt, insbesondere 3.000 bis 80.000, wobei $Re_{Injekt}$ definiert ist als

$$Re_{Injekt} = \frac{d * v_{mittel2}}{\eta}$$

mit

$$v_{mittel2} = \frac{4*N_2}{\pi*d^2},$$

$\eta$ = *kinematische Viskosität Inertgas bei Normalbedingungen* (18°C und Ibar),
$N_2$ = *Volumestrom Inertgas in Normliter* und
*d = Durchmesser der Einspeiseöffnung für* $N_2$.

6. Verfahren nach einem der vorstehenden Ansprüche, **dadurch gekennzeichnet, dass** der Extruder über wenigstens eine Schneckenwelle verfügt, insbesondere über wenigstens zwei Schneckenwellen, die bevorzugt gleichlaufend angetrieben sind.

7. Verfahren nach einem der vorstehenden Ansprüche, **dadurch gekennzeichnet, dass** der Einfüllschacht oberhalb des Extrudergehäuses angeordnet und weitestgehend vertikal ausgerichtet ist.

8. Verfahren nach einem der vorstehenden Ansprüche, **dadurch gekennzeichnet, dass** wenigstens eine der Inertgaseinspeisungs-Einrichtungen in einem Winkel von 90 +/-45°, bezogen auf die Zuführungsrichtung des zu extrudierenden Materials, ausgerichtet ist, bevorzugt in einem Winkel von 90 +/- 15°, weiter bevorzugt in einem Winkel von 90 +/- 5°.

9. Verfahren nach einem der Ansprüche 6 bis 8, **dadurch gekennzeichnet, dass** wenigstens eine der Inertgaseinspeisungs-Einrichtungen in einem Abstand von höchstens dem Dreifachen des Schneckenaussendurchmessers des Extruders oberhalb der Schneckenwellen-Oberkante angeordnet ist.

10. Verfahren nach Anspruch 9, **dadurch gekennzeichnet, dass** die Querschnittsfläche des Einfüllschachtes in Zuführungsrichtung des zu extrudierenden Materials unterhalb der Inertgaseinspeisungs-Einrichtung weitestgehend konstant ist, wobei beim Einsatz mehrerer Inertgaseinspeisungs-Einrichtungen die Querschnittsfläche des Einfüllschachtes in Zuführungsrichtung des zu extrudierenden Materials unterhalb der dem Extrudergehäuse am nächsten befindlichen Inertgaseinspeisungs-Einrichtung weitestgehend konstant ist.

11. Verfahren nach einem der Ansprüche 3 bis 10, **dadurch gekennzeichnet, dass** die Querschnittsfläche des Einfüllschachtes an seinem in das Extrudergehäuse mündenden Ende auf einer Länge von wenigstens der zweifachen charakteristischen Länge *l* weitestgehend konstant ist.

12. Verfahren nach einem der vorstehenden Ansprüche, **dadurch gekennzeichnet, dass** die Einzugskapazität des Extruders größer ist als der dosierte Mengenstrom des zu extrudierenden Materials.

13. Verfahren nach einem der vorstehenden Ansprüche, **dadurch gekennzeichnet, dass** die Sauerstoffkonzentration an der Einmündung des Einfüllschachts in das Extrudergehäuse unter 10 Vol.-% unter Normaldruck beträgt, insbesondere höchstens 8 Vol.-%, bevorzugt höchstens 7 Vol.-%, weiter bevorzugt höchstens 6 Vol.-%, bestimmt gemäß DIN EN 14789 - 2017-05.

14. Steuerungsvorrichtung zur variablen Einstellung des Sauerstoffgehalts im Zuführungsbereich eines Extruders bei dessen Betrieb, insbesondere in einem Verfahren nach einem der Ansprüche 1 bis 13, wobei der Extruder einen Einfüllschacht für die Zuführung eines zu extrudierenden Materials aufweist, der an seinem einen Ende eine Einlauföffnung besitzt und an seinem gegenüberliegenden Ende in das Extrudergehäuse mündet und in dem zumindest eine Inertgaseinspeisungs-Einrichtung für die Zuführung eines Inertgasstroms in den Einfüllschacht vorgesehen ist, wobei die Steuerungsvorrichtung derart ausgestaltet ist, dass damit der Inertgasvolumenstrom des Inertgasstroms in der Weise einstellbar ist, dass die Reynoldszahl Re des Inertgasstroms im Einfüllschacht wenigstens 180 beträgt, wobei die Steuerungsvorrichtung vorzugsweise derart ausgestaltet ist, dass damit die Reynoldszahl $Re_{Injekt}$ des Inertgasstroms am Punkt der Einspeisung in den Einfüllschacht auf wenigstens 3.000 einstellbar ist, insbesondere auf 3.000 bis 80.000, wobei $Re_{Injekt}$ definiert ist als

$$Re_{Injekt} = \frac{d * v_{mittel2}}{\eta}$$

mit

$$v_{mittel2} = \frac{4 * N_2}{\pi * d^2},$$

   $\eta$ = *kinematische Viskosität Inertgas bei Normalbedingungen* (18°C und lbar),
   $N_2$ = *Volumestrom Inertgas in Normliter* und
   *d* = *Durchmesser der Einspeiseöffnung für* $N_2$.

15. Extruder mit einer diesem zugeordneten Steuerungsvorrichtung zur variablen Einstellung des Sauerstoffgehalts gemäß Anspruch 14.

EUROPÄISCHER RECHERCHENBERICHT

**Nummer der Anmeldung**

EP 24 17 1600

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D | CN 114 248 415 A (JIANGYIN UP GLOW PACKAGING MAT LIMITED COMPANY) 29. März 2022 (2022-03-29) | 1-3,5-8, 10,11, 14,15 | INV. B29C48/14 B29C48/285 |
| Y | * Zusammenfassung * | 9,12 | B29C48/50 |
| A | * Abbildungen 1,5 * ----- | 4,13 | B29C48/92 |
| Y | WO 2012/108245 A1 (MITSUBISHI ENG PLASTICS CORP [JP]; TAJIRI TOSHIYUKI [JP] ET AL.) 16. August 2012 (2012-08-16) * Abbildung 1 * * Beispiel 1 * ----- | 9,12 | |
| X | JP 2006 341449 A (MITSUBISHI ENG PLASTICS CORP) 21. Dezember 2006 (2006-12-21) | 1-3, 6-12,14, 15 | |
| A | * Zusammenfassung * * Absatz [0028] * * Abbildung 2 * ----- | 4,5,13 | |
| X | JP 2000 015639 A (CANON KK) 18. Januar 2000 (2000-01-18) | 1-3, 6-11,14, 15 | RECHERCHIERTE SACHGEBIETE (IPC) |
| A | * Zusammenfassung * * Seiten 30,45 * * Abbildung 4 * ----- | 4,5,12, 13 | B29C |

Der vorliegende Recherchenbericht wurde für alle Patentansprüche erstellt

| Recherchenort | Abschlußdatum der Recherche | Prüfer |
|---|---|---|
| München | 15. Oktober 2024 | Koning, Erik |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

    ...................................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 24 17 1600

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

15-10-2024

| Im Recherchenbericht angeführtes Patentdokument | Datum der Veröffentlichung | Mitglied(er) der Patentfamilie | Datum der Veröffentlichung |
|---|---|---|---|
| CN 114248415 A | 29-03-2022 | KEINE | |
| WO 2012108245 A1 | 16-08-2012 | CN 102781640 A | 14-11-2012 |
| | | JP 4977786 B1 | 18-07-2012 |
| | | JP 2012162048 A | 30-08-2012 |
| | | KR 20120101665 A | 14-09-2012 |
| | | WO 2012108245 A1 | 16-08-2012 |
| JP 2006341449 A | 21-12-2006 | JP 4544043 B2 | 15-09-2010 |
| | | JP 2006341449 A | 21-12-2006 |
| JP 2000015639 A | 18-01-2000 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1318903 B1
- JP 2012162048 A
- CN 114248415 A
- EP 3913015 A1
- JP 3216321 A

**In der Beschreibung aufgeführte Nicht-Patentliteratur**

- *DIN EN 14034 - 4*, April 2011
- **DR. UTE HESENER**. Sicherheitstechnische Kenngrößen von Stäuben bei nicht-atmosphärischen Bedingungen. DEKRA EXAM GmbH, 2015